# EUROPEAN PATENT SPECIFICATION

(11) **EP 0 936 262 B1**
(45) Date of publication and mention of the grant of the patent: **28.05.2003**
(21) Application number: 99102061.1
(22) Date of filing: 02.02.1999
(51) Int. Cl.: C09K 3/14, C04B 18/02

(54) **Method to transform waste residues into granular products**
Verfahren zur Verarbeitung von Abfall zu körnigen Produkten
Procédé pour transformer des dechets en produits granuleux

(30) Priority: 10.02.1998 IT UD980016
(43) Date of publication of application: 18.08.1999
(73) Proprietor: Marmis Srl, 36036 Torrebelvicino (VI) (IT)
(72) Inventor: Biasiolo, Paolo, 36015 Schio (VI) (IT); Malaguti, Marco, 41010 Piumazzo di Castelfranco (MO) (IT); Tonello, Armando, 36015 Schio (VI) (IT); Tonello, Bruno, 36015 Schio (VI) (IT)
(74) Representative: Petraz, Gilberto Luigi

(56) References cited:
- EP-A- 0 451 815
- EP-A- 0 488 042
- DE-A- 4 340 786
- GB-A- 2 053 888
- US-A- 5 087 375
- US-A- 5 443 603
- DATABASE WPI Section Ch, Week 9320 Derwent Publications Ltd., London, GB; Class F07, AN 93-165040 XP002082496 & JP 05 098585 A (UENISHI KAGAKU KK) , 20 April 1993

## Description

### FIELD OF THE INVENTION

This invention concerns a method to transform waste residue deriving from the processing of ceramic materials, particularly porcelain grès, into granular products and granular products obtained with this method, as set forth in the respective main claims.

The invention is employed to recover waste residues, known as sludge, deriving from industrial processes such as shearing, grinding, roughing, smoothing, milling and otherwise, of ceramic materials such as porcelain grès, and to transform these residues into closed-pore granular products substantially spherical in shape and with the desired dimensional, mechanical and chemical/physical characteristics.

The granular products are used in particular, though not exclusively, in the textile field as an abrasive material in those washing processes which are normally called stone-washing, which provide a partial bleaching and/or softening of resistant fabrics such as, in particular, jeans.

In the following description we shall refer to the use of granular products as abrasive materials but this should not be taken as a restriction on the use of the invention.

### BACKGROUND OF THE INVENTION

The state of the art covers the problem of waste residues in the form of sludge resulting from the mechanical processing of ceramic materials, such as in particular porcelain grès.

These mechanical processes, such as shearing, roughing, abrasion, milling, pressing, smoothing, polishing, etc. are carried out in industries which work ceramic material, such as industries which produce tiles. They entail the production of powders which together with other components such as water, glues, solvents, etc., used in such mechanical processes, give rise to a waste residue consisting of sludge, more or less consistent according to the type of processing.

The composition of this sludge is extremely varied inasmuch as it depends on the material being worked; however, in general terms the sludge can be considered as consisting mainly of feldspar and/or clay and/or silicon and/or calcium carbonate and/or magnesium carbonate and/or silicates.

At present, this sludge is sent to dumps as inert material or is discharged into water courses; this causes high costs of disposal and also problems of pollution, as it is difficult to find suitable areas to eliminate this waste.

Attempts have been made to recover these waste products by returning them to the production cycles from which they came, but on the one hand this solution entails high costs because it is necessary to separate the usable parts from the unusable parts before they are re-used, and on the other hand it is possible to recycle only a minimal part of the overall quantity of waste.

In the state of the art, pumice stone is also used as an abrasive in textile washing processes used to partly bleach and/or soften resistant fabrics such as jeans.

However, it is well-known that pumice stone is a natural stone which can only be found in certain limited geographical areas and therefore it is extremely expensive.

Moreover, if this material were used extensively, in the long term supplies would run out.

As an alternative to pumice stone, various solutions have been proposed which provide to use rigid and resistant supports which are covered with abrasive powders such as, for example, silicon carbide. However, these alternatives have shown themselves to be very expensive both because they require complex mechanical processes, and also because covering the supports requires the use of very complex processes and plants, and also specific materials, particularly glues.

Document DE-A-4340786 describes a method to produce granular material from granular and/or pulverised raw materials; the method provides to mix the raw materials with inert materials to constitute a shaped, rough grain material which is then hardened hydro-thermically in an autoclave.

This method uses waste material from the building trade as raw material, for example aerated concrete flour, or glass powder or pebble flour, and preferably lime or cement as the inert material.

The recycled material has insulating characteristics, and is used to make litter material for animals, floors and similar.

This document does not provide to obtain spherical shaped granular products, obtained from working ceramic material such as porcelain grès, to be used as abrasive material for washing resistant fabrics such as jeans.

Since it is rough grained, the material obtained according to the teaching of DE'786 does not have the necessary characteristics of structural compactness and surface finish to be able to be used for this purpose.

Document EP-A-488042 shows a method to obtain granules with a high mechanical resistance by mixing a substance with a high liquefaction point with a mixture of organic industrial waste possibly containing toxic and harmful parts, with the possible addition of a thermo-melting binder.

EP'042 provides to use carbides, nitrides, oxides or borates as the substance with a high liquefaction point.

EP'042 provides to use clay, silica, aluminates, bentonite or similar as the thermo-melting binding element.

For industrial waste, EP'042 provides to use foundry scrap, sludge from galvanisation processes, ceramic sludge, carbon powders or the residues from chemical processes.

The granules obtained by the process described in EP'042 are used as filling material to make building articles.

This document, like DE'786, does not teach to obtain spherically shaped closed-pore granules characterised by a high level of structural compactness and surface finish, which can be used directly in industrial washing processes for resistant fabrics, particularly jeans or similar.

The present Applicant has designed and tested this invention to overcome the problem both of finding natural abrasive materials and of eliminating waste sludge obtained from the working of ceramic material.

### SUMMARY OF THE INVENTION

The invention is set forth and characterised in the respective main claims, while the dependent claims describe variants of the idea of the main embodiment.

The main purpose of the invention is to provide a method to recover and transform the waste sludge deriving from the mechanical processing of ceramic products, which will be simple and economical and will allow an almost complete recycling of the waste material in order to be subsequently used in the field of industry, mainly in the field of industrial washing of resistant fabrics such as jeans or similar.

Another purpose is to achieve, by means of this recovery process, closed-pore granular elements which are substantially spherical in shape and have the desired surface finish and the desired mechanical, dimensional and chemical/physical characteristics, which granular elements can replace natural products used in the textile field as an abrasive material.

The method according to the invention provides to add other components to the sludge as it is produced by the afore-said processes, suitably batched, and possibly mixed with granules of magnesian cement deriving from the polishing grinders; these other components are natural or artificial, primary or recovered, and are added in suitable percentage quantities in order to form a compound with the desired consistency.

In the compound, the percentage of raw material consisting of porcelain grès sludges and magnesian cement is between 80% and 95% in weight; the residual 5-20% in weight consists of the added additives.

This compound is subsequently shaped into closed-pore granular products with the desired shape and size.

In the preferential embodiment of the invention, the granular products are shaped like balls and have a diameter of between 2 and 50 mm, advantageously between 10 and 30 mm.

The components added to the sludge are chosen, according to the subsequent application of the recovered material, so as to render the compound easily workable and to give the finished granular products obtained therefrom the desired characteristics as required on each occasion in terms of structural compactness, surface finish, durability and/or abrasive power and/or specific weight and so on.

According to a variant, the components are also added to the surface of the granular products, advantageously when they are still damp, as they emerge from the molding step.

According to the invention, the granular products emerging from the molding step are sprinkled with a powdered product which has the function of covering the surface finishing, and also of preventing the granular products which are still damp from sticking to each other or to any possible movement means.

The method according to the invention then provides that the granular products emerging from the molding step are subjected to heat treatment.

In the invention, the components added to the sludge are selected from glass powder, corundum powder, silicon carbide, alumina, clay.

These components are used individually or in a desired combination together and in the appropriately gauged percentages according to the desired characteristics of the final recovered product.

In the preferred embodiment of the invention clay is added to the sludge at a percentage of between 0.1 and 50% in weight with respect to the overall quantity of additives; it serves to give the compound the desired consistency and elasticity.

Glass powder, in the preferred embodiment of the invention, is added to the sludge at a percentage of between 0.1 and 40% in weight with respect to the overall quantity of additives; it serves to give the compound a greater binding power.

Corundum powder, in the preferred embodiment of the invention, is added to the sludge at a percentage of between 0.1 and 30% in weight with respect to the overall quantity of additives; it serves to increase both the abrasive power and the working life of the granular products.

Alumina and silicon carbide, in the preferred embodiment of the invention, are added to the sludge at a percentage of between 0.1 and 40% and 0.1 and 50% in weight with respect to the overall quantity of additives; they serve to increase the specific weight and the durability of the granular products.

### BRIEF DESCRIPTION OF THE DRAWINGS

The attached Figures are given as a non-restrictive example and show a preferential embodiment of the invention as follows:

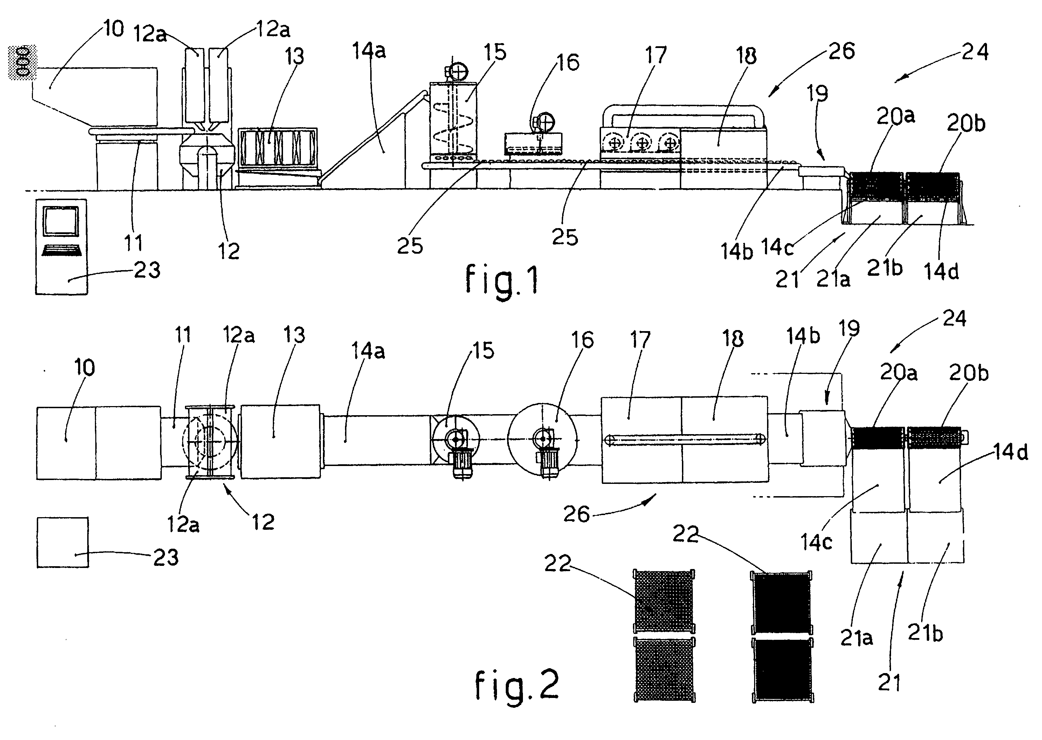

- Fig. 1: is a side view of a plant achieving the transformation method according to the invention;
- Fig. 2: is a plane view of the plant shown in Fig. 1.

### DETAILED DESCRIPTION OF THE PREFERRED EMBODIMENT

The plant 24 shown in the attached Figures comprises, at the entrance to the processing line, a silo 10 where the waste sludge deriving from the mechanical processing of ceramic materials is stored, the largest pieces having been previously removed by sifters or similar before being loaded; the ceramic material used in particular is porcelain grès, and may possibly be mixed with magnesian cement powder deriving from the polishing grinders.

The silo 10 is associated with a weighing assembly 11, which feeds the processing line comprising, in sequence, a mixing assembly 12, a pressing and filtering assembly 13, an extrusion assembly 15, a surface finishing assembly 16, a drying assembly 26, a selection assembly 19 and a packaging assembly 21.

These assemblies are connected with each other by conveyor belts 14a-14d and automatically driven by a control unit 23.

The function of the weighing assembly 11, in this case of the type with a weighing belt, is to monitor instantaneously the flow of the sludge emerging from the silo 10.

The values monitored by the weighing assembly 11 are used by the control unit 23 to determine instantaneously and automatically the exact quantities of the additive components, such as clay, corundum powder, glass powder, alumina, silicon carbide, etc. contained in the storage tank 12a of the mixing assembly 12.

The operator sets the desired percentages of the additive components by means of the control unit 23 in such a manner that the control unit 23 is able to automatically command the mixing assembly 12 so as to obtain the desired proportions of the components.

The compound has a percentage in weight of between 80 and 95% of raw material, consisting of the waste sludge, while the remaining 5-20% consists of the additives.

The mixture obtained at the outlet of the mixing assembly 12 is sent to a filtering and pressing assembly 13 which has the function of eliminating from the mixture the excess water so that the compound is damp at outlet.

The damp compound is then conveyed, on a conveyor belt 14a, to an extrusion assembly 15 with a replaceable extrusion head suitable to extrude granular products 25 of the desired shape and size.

The closed-pore granular products 25 consist of little balls, with a diameter of between 2 and 50 mm, advantageously between 10 and 30 mm.

The granular products 25 are then sent on a conveyor belt 14b to a surface finishing assembly 16 which has the function of covering the surface of the granular products 25 with powdery products such as, for example, magnesium carbonate powder.

The magnesium carbonate powder provides the surface finishing cover so that the little balls leaving the molding process can be used immediately for their purpose, for example in industrial washing processes; moreover the powder prevents the granular products 25 from sticking to each other and/or to the conveyor belt 14b during the heat treatment which is carried out by the drying assembly 26 included immediately downstream of the surface finishing assembly 16.

In the case shown here, the drying assembly 26 has two furnaces placed in series; the first furnace 17 to pre-dry the granular products 25 with a temperature of between 400 and 800°C and the second furnace 18 to bake the granular products 25 with a temperature of between 800 and 1500°C.

The granular products 25 emerging from the second furnace 18 are then unloaded from the conveyor belt 14b onto a selection assembly or sifter 19 which, in the case shown here as an example, comprises two rotary screens, respectively 20a and 20b, suitable to separate the granular products 25 into two different granulometric categories.

The granular products 25 selected by this assembly are then conveyed on the conveyor belts 14c and 14d to respective storage containers 22 which are filled until they reach a pre-determined weight set by the operator by means of the control unit 23 and monitored by scales 21a and 21b located at the outlet of the conveyor belts 14c and 14d.

## Claims

1. Method to transform into granular products waste residues from the mechanical processing of ceramic products, such as in particular porcelain grès, the granular products being used as abrasive products in textile washing processes, the method being **characterised in that** it provides to subject the waste residues deriving from the said working of ceramic material to at least a step of mixing with additive components, to a step of molding and to a step of heat treatment, wherein the percentage in weight of the waste residues is between 80 and 95%, and the remaining 5+20% consists of the additive components, the additive components being selected from glass powder, corundum powder, alumina, silicon carbide and clay, the molding step providing to obtain closed-pore granules substantially spherical in shape with a diameter of between 2 and 50 mm, there also being included a step to finish and cover the surface of the spherical shaped granules emerging from the molding step.

2. Method as in Claim 1, **characterised in that** between the mixing step and the molding step there is a pressing and filtering step to eliminate excess water from the compound.

3. Method as in Claim 1 or 2, **characterised in that** the molding step provides for the extrusion of the damp compound emerging from the pressing and filtering step.

4. Method as in Claim 1, **characterised in that** the heat treatment step comprises at least a first pre-drying step at a temperature of between 400°C and 800°C and at least a second baking step at a temperature of between 800°C and 1500°C.

5. Method as in Claim 1, **characterised in that** the surface finishing step includes the sprinkling of powdery products on the surface of the granular products (25).

6. Method as in Claim 5, **characterised in that** the powdery product consists of magnesium carbonate powder.

7. Method as in any claim hereinbefore, **characterised in that** it is automatically assisted and managed by a control unit (23).

8. Granular product obtained using the method as in any of the claims hereinbefore, the granular products being used particularly but not exclusively as abrasive products in textile washing processes, the granular product being **characterised in that** it is shaped in balls with closed pores and a diameter of between 2 and 50 mm and has a composition consisting, to a value of 80ö95% in weight, of waste sludge obtained from working ceramic products such as porcelain grès, possibly mixed with magnesian cement deriving from the polishing grinders, and consisting, for the remaining 5ö20% in weight, of one or more additive components selected, in suitable percentages, from glass powder, corundum powder, alumina, silicon carbide and clay, the granular products also including a surface covering consisting of a layer of powder.

9. Granular product as in Claim 8, **characterised in that** clay is used to a percentage of between 0.1 and 50 of the overall weight of the additives.

10. Granular product as in Claim 8, **characterised in that** glass powder is used to a percentage of between 0.1 and 40 of the overall weight of the additives.

11. Granular product as in Claim 8, **characterised in that** corundum powder is used to a percentage of between 0.1 and 30 of the overall weight of the additives.

12. Granular product as in Claim 8, **characterised in that** alumina is used to a percentage of between 0.1 and 40 of the overall weight of the additives.

13. Granular product as in Claim 8, **characterised in that** silicon carbide is used to a percentage of between 0.1 and 50 of the overall weight of the additives.

14. Granular product as in Claim 8, **characterised in that** the layer of surface covering consists of magnesium carbonate powder.

15. Granular product as in Claim 8, **characterised in that** it is substantially spherical in shape with a diameter of between 10 and 30 mm.

## Patentansprüche

1. Verfahren zur Umwandlung von Abfall-Rückständen aus der mechanischen Verarbeitung von Keramikprodukten, wie insbesondere Gres-Porzellan, in körnige Produkte, wobei die kömigen Produkte als abrasive Mittel in textilen Waschprozessen eingesetzt werden, **dadurch gekennzeichnet, dass** bei dem Verfahren die bei der Verarbeitung von keramischem Material anfallenden Abfall-Rückstände wenigstens einem Verfahrensschritt des Mischens mit Additiv-Komponenten, einem-Verfahrensschritt des Formens und einem Verfahrensschritt der Wärmebehandlung ausgesetzt werden, wobei der Prozentsatz des Gewichts der Abfall-Rückstände zwischen 80 und 95 % liegt, und die verbleibenden 5-20 % aus den Additiv-Komponenten bestehen; die Additiv-Komponenten aus Glaspulver, Korundpulver, Aluminiumoxid, Siliziumcarbid und Ton ausgewählt werden; der Verfahrensschritt des Formens zum Erhalt geschlossen-poriger Körner mit einer im Wesentlichen sphärischen Form mit einem Durchmesser zwischen 2 und 50 mm dient, und ebenfalls ein weiterer Verfahrensschritt der Endbearbeitung und der Bedeckung der Oberflächen der aus dem Verfahrensschritt des Formens hervorgegangenen sphärisch gestalteten Körner eingeschlossen ist.

2. Verfahren nach Anspruch 1, **dadurch gekennzeichnet, dass** zwischen dem Verfahrensschritt des Mischens und dem Verfahrensschritt des Formens ein Verfahrensschritt des Pressens und Filterns vorgesehen ist, um überschüssiges Wasser aus dem Gemisch zu entfernen.

3. Verfahren nach Anspruch 1 oder 2, **dadurch gekennzeichnet, dass** beim Verfahrensschritt des Formens das aus dem Verfahrensschritt des Pressens und Filterns hervorgehende feuchte Gemisch extrudiert wird.

4. Verfahren nach Anspruch 1, **dadurch gekennzeichnet, dass** der Verfahrensschritt der Wärmebehandlung wenigstens einen ersten Verfahrensschritt des Vortrocknens bei einer Temperatur zwischen 400°C und 800°C, und wenigstens einen zweiten Verfahrensschritt des Brennens bei einer Temperatur zwischen 800°C und 1500°C, aufweist.

5. Verfahren nach Anspruch 1, **dadurch gekennzeichnet, dass** der Verfahrensschritt der Endbearbeitung das Berieseln der Oberfläche der körnigen Produkte (25) mit pulvrigen Produkten enthält.

6. Verfahren nach Anspruch 5, **dadurch gekennzeichnet, dass** die pulvrigen Produkte aus Magnesiumcarbonatpulver bestehen.

7. Verfahren nach einem der vorhergehenden Ansprüche, **dadurch gekennzeichnet, dass** dieses automatisch durch eine Kontrolleinheit (23) unterstützt und geleitet wird.

8. Körniges Produkt erhalten durch Anwendung des Verfahrens nach einem der vorhergehenden Ansprüche, wobei die körnigen Produkte insbesondere, aber nicht ausschließlich, als abrasive Produkte in textilen Waschprozessen verwendet werden, **dadurch gekennzeichnet, dass** das körnige Produkt zu Kugeln mit geschlossenen Poren und einem Durchmesser zwischen 2 und 50 mm geformt ist, und eine Zusammensetzung aufweist, die zu einem Wert von 50 bis 95 Gewichtsprozent aus Abfall-Schlamm besteht, der aus der Bearbeitung von Keramikprodukten, wie beispielsweise Gres-Porzellan, erhalten wird, welches möglicherweise mit aus Poliermühlen stammendem Magnesium-Bindemittel vermischt ist, und wobei die restlichen 5 bis 20 Gewichtsprozent der Zusammensetzung aus einer oder mehreren Additiv-Komponenten besteht, die in angemessen Prozentsätzen aus Glaspulver, Korundpulver, Aluminiumoxid, Siliziumcarbid und Ton ausgewählt sind, wobei die kömigen Produkte ebenfalls eine Oberflächen-Bedeckung aufweisen, die aus einer Lage aus Pulver besteht.

9. Körniges Produkt nach Anspruch 1, **dadurch gekennzeichnet, dass** Ton zu einem Prozentsatz zwischen 0,1 und 50% des Gesamtgewichts der Additive verwendet wird.

10. Körniges Produkt nach Anspruch 8, **dadurch gekennzeichnet, dass** Glaspulver zu einem Prozentsatz zwischen 0,1 und 40% des Gesamtgewichts der Additive verwendet wird.

11. Körniges Produkt nach Anspruch 8, **dadurch gekennzeichnet, dass** Korundpulver zu einem Prozentsatz zwischen 0,1 und 30% des Gesamtgewichts der Additive verwendet wird.

12. Körniges Produkt nach Anspruch 8, **dadurch gekennzeichnet, dass** Aluminiumoxid zu einem Prozentsatz zwischen 0,1 und 40 % des Gesamtgewichts der Additive verwendet wird.

13. Körniges Produkt nach Anspruch 8, **dadurch gekennzeichnet, dass** Siliziumkarbid zu einem Prozentsatz zwischen 0,1 und 50 % des Gesamtgewichts der Additive verwendet wird.

14. Körniges Produkt nach Anspruch 8, **dadurch gekennzeichnet, dass** die Lage der Oberflächen-Bedeckung aus Magnesiumcarbonatpulver besteht.

15. Kömiges Produkt nach Anspruch 8, **dadurch gekennzeichnet, dass** dieses eine im Wesentlichen sphärische Form mit einem Durchmesser zwischen 10 und 30 mm besitzt.

## Revendications

1. Procédé de transformation en produits granulaires des déchets dérivant de l'usinage de produits céramiques, tels que grès de porcelaine en particulier, les produits granulaires étant utilisés en fonction de produits abrasifs dans les procédés de lavage textile, le procédé étant **caractérisé en ce qu'**il prévoit de soumettre les déchets dérivant dudit usinage de matériel céramique au moins à une phase de mélange avec des composants additifs, une phase de moulage et une phase de traitement thermique, dans lequel la teneur en poids des déchets est comprise entre 80 et 95% et le 5ö20% restant est constitué des composants additifs, les composants additifs étant choisis de poudre de verre, poudre de corindon, alumine, carbure de silicium et argile, la phase de moulage prévoyant d'obtenir des grains à pores fermés de forme fondamentalement sphérique avec un diamètre compris entre 2 et 50 mm, étant comprise aussi une phase de finissage et revêtement de la surface des grains de forme sphérique venant de la phase de moulage.

2. Procédé selon la revendication 1, **caractérisé en ce que** entre la phase de mélange et la phase de moulage il y a une phase de pressage et filtrage pour éliminer l'eau excédentaire du composé.

3. Procédé selon la revendication 1 ou 2, **caractérisé en ce que** la phase de moulage prévoit l'extrusion du composé humide venant de la phase de pressage et filtrage.

4. Procédé selon la revendication 1, **caractérisé en ce que** la phase de traitement thermique comprend au moins une première phase de préséchage avec une température comprise entre 400°C et 800°C et au moins une deuxième phase de cuisson avec une température comprise entre 800°C et 1500°C.

5. Procédé selon la revendication 1, **caractérisé en ce que** la phase de finissage de la surface comprend l'aspersion de produits pulvérulents sur la surface des produits granulaires (25).

6. Procédé selon la revendication 5, **caractérisé en ce que** le produit pulvérulent est constitué de poudre de carbonate de magnésium.

7. Procédé selon l'une ou l'autre des revendications précédentes, **caractérisé en ce qu'**il est assisté et géré automatiquement par une unité de contrôle (23).

8. Produit granulaire obtenu par l'utilisation du procédé selon l'une ou l'autre des revendications précédentes, les produits granulaires étant utilisés particulièrement mais non exclusivement en fonction de produits abrasifs dans les procédés de lavage textile, le produit granulaire étant **caractérisé en ce qu'**il est façonné en sphères à pores fermés avec un diamètre compris entre 2 et 50 mm et a une composition constituée, pour une valeur de 80ö95% en poids, de boues de rebut obtenues de l'usinage de produits céramiques tels que grès de porcelaine, si possible mélangés avec du ciment magnésique venant des meules de polissage, et constituée, pour le 5ö20% en poids restant, d'un ou plusieurs composants additifs choisis, dans une teneur convenable, de poudre de verre, poudre de corindon, alumine, carbure de silicium et argile, les produits granulaires comprenant aussi un revêtement superficiel constitué d'une couche de poudre.

9. Produit granulaire selon la revendication 8, **caractérisé en ce que** l'argile est utilisée dans une teneur comprise entre 0,1 et 50 du poids total des additifs.

10. Produit granulaire selon la revendication 8, **caractérisé en ce que** la poudre de verre est utilisée dans une teneur comprise entre 0,1 et 40 du poids total des additifs.

11. Produit granulaire selon la revendication 8, **caractérisé en ce que** la poudre de corindon est utilisée dans une teneur comprise entre 0,1 et 30 du poids total des additifs.

12. Produit granulaire selon la revendication 8, **caractérisé en ce que** l'alumine est utilisée dans une teneur comprise entre 0,1 et 40 du poids total des additifs.

13. Produit granulaire selon la revendication 8, **caractérisé en ce que** le carbure de silicium est utilisé dans une teneur comprise entre 0,1 et 50 du poids total des additifs.

14. Produit granulaire selon la revendication 8, **caractérisé en ce que** la couche de revêtement superficiel est constituée de poudre de carbonate de magnésium.

15. Produit granulaire selon la revendication 8, **caractérisé en ce qu'**il a une forme fondamentalement sphérique, avec un diamètre compris entre 10 et 30 mm.
